# EUROPEAN PATENT APPLICATION

(11) **EP 1 900 785 A1**
(43) Date of publication of application: **19.03.2008**
(21) Application number: 07104312.9
(22) Date of filing: 16.03.2007
(51) Int. Cl.: C09D 11/00

(54) **Ink Composition for Inkjet Recording**

(30) Priority: 14.09.2006 KR 20060089251
(71) Applicant: SAMSUNG ELECTRONICS CO., LTD., Suwon-City, Kyungki-do (KR)
(72) Inventor: Park, Heung-sup, Yeongtong-dong,Yeongtong-gu Suwon-si Gyeonggi-do (KR); Ryu, Seung-Min, 2-cha Hometown Apt. 862 Dongcheon-dong Suji-gu,Yongin-si Gyeonggi-do (KR); Roh, Hee-jung, Gyeonggi-do (KR)
(74) Representative: Killin, Stephen James

(57) **Abstract**

An ink composition for inkjet recording, and more particularly, an ink composition for inkjet recording in which a kogation problem in a thermal inkjet printer can be decreased.

## Description

The present general inventive concept relates to an ink composition for inkjet recording, and more particularly, to an ink composition for inkjet recording, in which a problem of kogation in thermal inkjet printers can be decreased.

In recent years, there has been an increased need to produce color hard copies of images by printing. Accordingly, various methods to produce color hard copies have been developed. Examples of the method include a dye-sublimation recording, a thermal wax transfer recording, an inkjet recording, an electrophotographic recording, and a thermally processed silver recording.

In the inkjet recording, an image is recorded by ejecting ink droplets on a recording medium, such as a sheet of paper, from a nozzle in a recording head of an inkjet printer to form a point called a "dot". Inkjet recording is advantageous in reducing manufacturing costs, improving printing quality, and facilitating the color image formation compared to other recordings. An ink composition used in inkjet printing is prepared by dissolving or dispersing a water-soluble dye or pigment in a solvent including water and a water-soluble organic solvent. Additional agents such as a surfactant may further be included in the ink composition.

An inkjet printer can be categorized according to the method of ejecting ink into a piezoelectric type printer which ejects ink using a piezoelectric device and thermal type printer which ejects ink using a thermal device.

In the thermal type printer, ink contained in an ink chamber of the inkjet recording head is locally heated and bubbles are generated therein, accordingly, ink droplets of the ink are ejected on a recording medium through an orifice, such as a nozzle, due to an expansion force of the bubbles. Thus, the thermal type printer includes the thermal device which is installed in the ink chamber and heats the ink and an operating circuit, such as a logic integrated circuit, that operates the thermal device. Furthermore, the thermal device is prepared by forming a corrosion-resistant material, such as tantalum, tantalum aluminum, and titanium, on a substrate using a sputtering technique that is commonly used in semiconductor processes, forming an Al electrode on the corrosion-resistant material, and forming a protecting layer, such as silicon nitride. A nozzle having a diameter of 10 to 40 µmshould not be clogged by the ink, and a surface of the thermal device and ink pen should not be damaged with repeated ejections of the ink.

Currently, tantalum, which is firm and highly resistant to physical damage and chemical corrosion, is widely used as the protecting layer. However, despite these properties of tantalum, the protecting layer may be damaged after many repeated ejections.

Meanwhile, when ink that is used in a common inkjet recording is used in a thermal inkjet printer, impurities, such as metal ions introduced during dyestuff synthesis or residues of thermal decomposition of the dyestuffs, can be deposited on the surface of the thermal device. This deposition is called "kogation". Due to kogation, the local heating of the ink may be insufficiently performed, and bubble generation may be inhibited or bubbles may not be uniformly generated, and thus, an ink ejection rate can be decreased and ink droplets may not be appropriately ejected.

In addition to kogation, a passivation layer of the thermal device can be damaged by cavitation. Micro cavities can be formed on the corrosion-resistant surface and shorten the lifetime of the corrosion-resistant layer due to cavitation. The performing of many repeated ejections may erode the passivation layer by oxidation due to the cavitations and chemical reactions of the ink at a high temperature. This erosion of the passivation layer may decrease the stability of the ejection rate by damaging an insulation layer, generating a short circuit in an electricity supply, or decreasing a thermal conductivity of the resistant layer.

Stabilizing the ejection rate in each nozzle or between nozzles is important to obtain precise positions of dots. An error in the dot position may degrade a quality of images produced. When a volume of ink droplets is low, the error in the dot position can be more obviously observed.

In the inkjet printer industry, a demand for a printer having high resolutions with smaller ink droplets and a long lifetime has increased. Costs and efforts required to manage printer heads can be decreased by using a printer head having a long lifetime. However, when the ink droplets are smaller, higher numbers of ejections should be made, and thus the damage in the passivation layer may be more serious. However, if a thickness of the passivation layer is increased to lessen the damage, a large amount of energy is required in the ejection, which is not desirable.

Accordingly, dyestuffs and pigments which have a high thermal stability can be used in order to prevent kogation. Alternatively, impurities, such as metal ions introduced during the dyestuff synthesis, can be removed from the dyestuff to prevent kogation. However, thermal decomposition of dyestuffs in the ink cannot be avoided, and thus, deposition of residues of the thermal decomposition of the dyestuffs on the thermal device cannot be avoided either even if a high quality ink is used or the ink is purified to remove impurities, such as metal ions. Therefore, kogation cannot be completely prevented using such methods, and other known methods have additional limitations and/or adverse side effects.

The present general inventive concept provides an ink composition for inkjet recording in which ink droplets can be smoothly ejected in a printer head in a long-term use by decreasing an amount of kogation.

Additional aspects and advantages of the present general inventive concept will be set forth in part in the description which follows and, in part, will be apparent from the description, or may be learned by practice of the general inventive concept. The foregoing and/or other aspects and utilities of the present general inventive concept may be achieved by providing an ink composition for inkjet recording including at least one amine-based compound represented by Formula 1 below, at least two surfactants, a coloring agent, and a solvent. 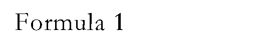 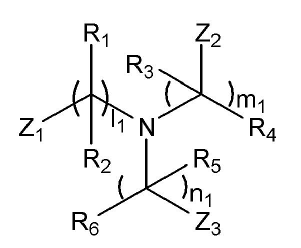 R₁, R₂, R₃, R₄, R₅ and R₆ may each independently be one of a hydrogen atom, a halogen atom, a nitro group, a hydroxyl group, an amino group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, or a substituted or unsubstituted C3-C20 heterocycloalkyl group.
Z₁, Z₂ and Z₃ may each independently be one of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, or a substituted or unsubstituted C3-C20 heterocycloalkyl group. l₁, m₁, and n₁ may each independently be integers from 0 to 5 and at least one of l₁, m₁ and n₁ is an integer greater than 1.

The compound represented by Formula 1 may be one of an alkylamine-based compound, an alkanolamine-based compound, and a mixture thereof.
The alkylamine-based compound may be one of methylamine, ethylamine, propylamine, butylamine, pentylamine, N,N-dimethylamine, N,N-diethylamine, N,N-dipropylamine, N,N-dibutylamine, N,N-dipentylamine, trimethylamine, triethylamine, tripropylamine, tributylamine, tripentylamine, and a mixture having at least two thereof.

The alkanolamine-based compound may be one of methanolamine, ethanolamine, propanolamine, butanolamine, pentanolamine, N-methylmethanolamine, N-ethylmethanolamine, N-propylmethanolamine, N-butylmethanolamine, N-pentylmethanolamine, N-methylethanolamine, N-ethylethanolamine, N-propylethanolamine, N-butylethanolamine, N-pentylethanolamine, N-methylpropanolamine, N-ethylpropanolamine, N-propylpropanolamine, N-butylpropanolamine, N-pentylpropanolamine, N-methylbutanolamine, N-ethylbutanolamine, N-propylbutanolamine, N-butylbutanolamine, N-pentylbutanolamine, N-methylpentanolamine, N-ethylpentanolamine, N-propylpentanolamine, N-butylpentanolamine, N-pentylpentanolamine, N,N-dimethylmethanolamine, N,N-diethylmethanolamine, N,N-dipropylmethanolamine, N,N-dibutylmethanolamine, N,N-dipentylmethanolamine, N,N-dimethylethanolamine, N,N-diethylethanolamine, N,N-dipropylethnaolamine, N,N-dibutylethanolamine, N,N-dipentylethanolamine, N,N-dimethylpropanolamine, N,N-diethylpropanolamine, N,N-dipropylpropanolamine, N,N-dibutylpropanolamine, N,N-dipentylpropanolamine, N,N-dimethylbutanolamine, N,N-diethylbutanolamine, N,N-dipropylbutanolamine, N,N-dibutylbutanolamine, N,N-dipentylbutanolamine, N,N-dimethylpentanolamine, N,N-diethylpentanolamine, N,N-dipropylpentanolamine, N,N-dibutylpentanolamine, N,N-dipentylpentanolamine, N-methyldimethanolamine, N-ethyldimethanolamine, N-propyldimethanolamine, N-butyldimethanolamine, N-pentyldimethanolamine, N-methyldiethanolamine, N-ethyldiethanolamine, N-propyldiethanolamine, N-butyldiethanolamine, N-pentyldiethanolamine, N-methyldipropanolamine, N-ethyldipropanolamine, N-propyldipropanolamine, N-butyldipropanolamine, N-pentyldipropanolamine, N-methyldibutanolamine, N-ethyldibutanolamine, N-propyldibutanolamine, N-butyldibutanolamine, N-pentyldibutanolamine, N-methyldipentanolamine, N-ethyldipentanolamine, N-propyldipentanolamine, N-butyldipentanolamine, N-pentyldipentanolamine, trimethanolamine, triethanolamine, tripropanolamine, tributanolamine, tripentanolamine, and a mixture having at least two thereof.

The at least two surfactants may be one of compounds represented by Formulae 2 through 5 below. 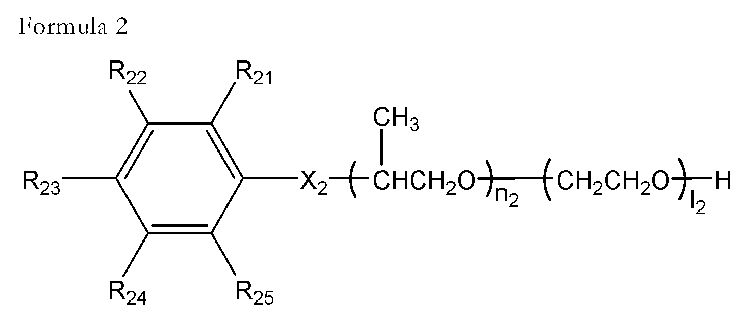 R₂₁, R₂₂, R₂₃, R₂₄, R₂₅, and R₂₆ may each independently be one of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group.
X₂ may be one of a bond, an oxygen atom, a sulfur atom, NR₂₆, a substituted or unsubstituted C2-C20 alkylene group, a substituted or unsubstituted C2-C20 heteroalkylene group, a substituted or unsubstituted C6-C30 arylene group, a substituted or unsubstituted C6-C30 heteroarylene group, a substituted or unsubstituted C2-C20 alkenylene group, a substituted or unsubstituted C2-C20 heteroalkenylene group, a substituted or unsubstituted C5-C30 cycloalkylene group, a substituted or unsubstituted C7-C30 aralkylene group, a carbonyl group, and a carboxy group.

l₂ and n₂ may each be independently integers from 0 through 100 and at least one of l₂ and n₂ is an integer greater than 1. 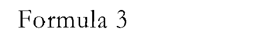 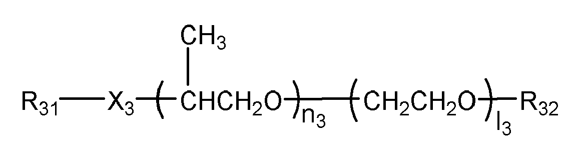 R₃₁ and R₃₂ may each independently be the same as R₁ described above.
X₃ may be the same as X₂ described above.
l₃ and n₃ may each independently be integers from 0 through 100and at least one of l₃ and n₃ is an integer greater than 1.

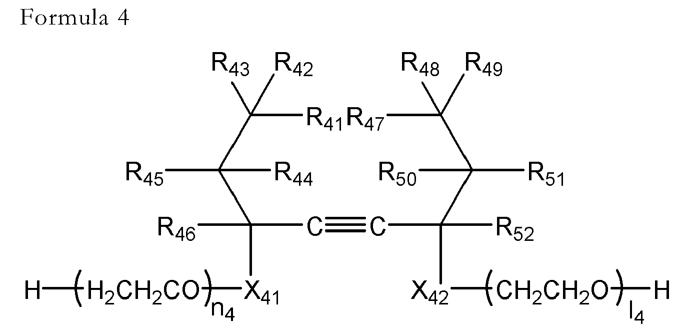

R₄₁, R₄₂, R₄₃, R₄₄, R₄₅, R₄₆, R₄₇, R₄₈, R₄₉, R₅₀, R₅₁, and R₅₂ may each independently be the same as R₂₁ described above.
X₄₁ and X₄₂ may each independently be the same as X₂ described above.
l₄ and n₄ may each independently be integers from 0 through 100 and at least one of l₄ and n₄ is an integer greater than 1.

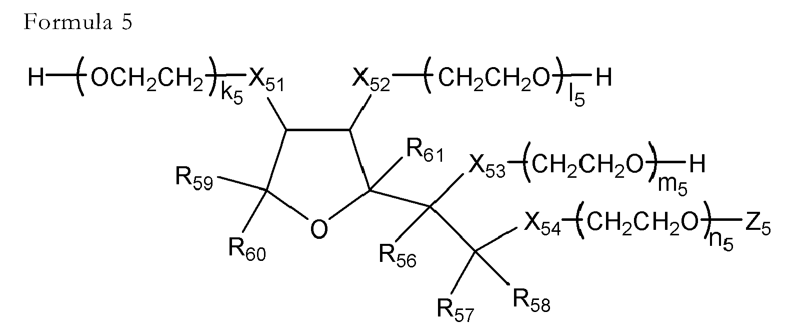

R₅₆, R₅₇, R₅₈, R₅₉, R₆₀, and R₆₁ may each independently be the same as R₂₁ described above.
Z₅ may be the same as R₂₁ described above.

X₅₁ and X₅₂ may each independently be the same as X₂ described above.

k₅, l₅, m₅, and n₅ may each independently be integers from 0 through 100 and at least one of l₅ and n₅ is an integer greater than 1.

The at least two surfactants may include a compound represented by Formula 4. At least one of the at least two surfactants may have a Hydrophilic Lipophilic Balance (HLB) greater than 12, and at least one of at least two surfactants may have an HLB of less than 12.

At least one of the at least two surfactants may have an HLB between 12 and 20, and at least one of the at least two surfactants may have an HLB between 4 and 12. The amount of the amine-based compound of Formula 1 may be in the range of about 0.5 to 10 parts by weight based on 100 parts by weight of the ink composition The amount of the at least two surfactants may be in the range of about 0.5 to 20 parts by weight based on 100 parts by weight of the ink composition.

The coloring agent may be one of a dyestuff, a pigment, and a self-dispersing pigment.

The amount of the coloring agent may be in the range of about 0.1 to 15 parts by weight based on 100 parts by weight of the ink composition.

The solvent may be one of a water-based solvent, an organic solvent, and a mixture thereof.

The amount of the solvent may be in the range of about 70 to 90 parts by weight based on 100 parts by weight of the ink composition.

The organic solvent may include at least one of an alcohol, a ketone, an ester, a polyhydric alcohol, a polyhydric alcohol derivative, a nitrogen-containing compound, or a sulfur-containing compound such as dimethyl sulfoxide, tetramethylene sulfone, or thioglycol.

The solvent may include 100 parts by weight of the water-based solvent and about 0.1-130 parts by weight of the organic solvent.

The surface tension of the ink composition may be in the range of about 15 to 70 dyne/cm at 20°C.

The viscosity of the ink composition may be in the range of about 1.5 to 20 cps. The foregoing and/or other aspects and utilities of the present general inventive concept may also be achieved by providing a multicolor ink set including at least two ink compositions, each ink composition including at least one amine-based compound represented by Formula 6 below, at least two surfactants, a coloring agent, and a solvent. 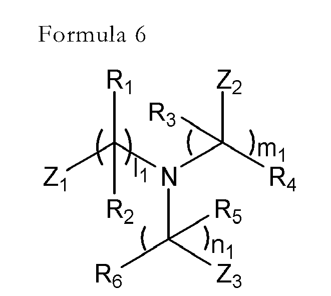 R₁, R₂, R₃, R₄, R₅, and R₆ may each independently be one of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group.
Z₁, Z₂, and Z₃ may each independently be one of hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group.
1₁, m₁, and n₁ may each independently be integers from 0 to 5 and at least one of 1₁, m₁, and n₁ is an integer greater than 1.

The foregoing and/or other aspects and embodimentsof the present general inventive concept may also be achieved by providing an ink cartridge for an inkjet recording apparatus comprising a multicolor ink set having at least two ink compositions, each ink composition including at least one amine-based compound represented by Formula 7 below, at least two surfactants, a coloring agent, and a solvent. 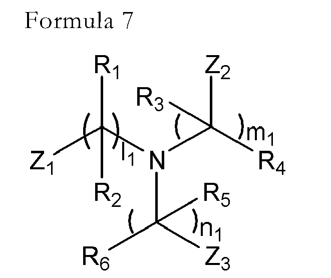 R₁, R₂, R₃, R₄, R₅, and R₆ may each independently be one of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group.
Z₁, Z₂, and Z₃ may each independently be one of hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group. 1₁, m₁, and n₁ may each independently be integers from 0 to 5 and at least one of l₁, m₁, and n₁ is an integer greater than 1.

The foregoing and/or other aspects and utilities of the present general inventive concept may also be achieved by providing an inkjet recording apparatus including an ink cartridge having a multicolor ink set including at least two ink compositions, each ink composition including at least one amine-based compound represented by Formula 8 below, at least two surfactants, a coloring agent, and a solvent. 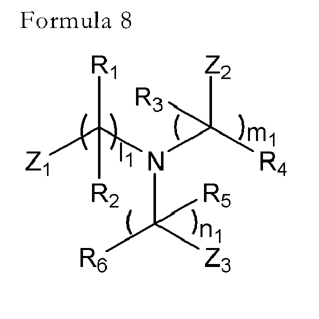 R₁, R₂, R₃, R₄, R₅, and R₆ may each independently be one of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group.
Z₁, Z₂, and Z₃ may each independently be one of hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group. 1₁, m₁, and n₁ may each independently be integers from 0 to 5 and at least one of 1₁, m₁, and n₁ is an integer greater than 1.

The inkjet recording apparatus may include a thermal head.

The inkjet recording apparatus may include an array head having about 10,000 nozzles or more.

The foregoing and/or other aspects and utilities of the present general inventive concept may also be achieved by providing an inkjet composition for inkjet recording, including at least one amine-based compound of 0.5 to 10 parts by weight based on 100 parts by weight of the inkjet composition, at least two surfactants having a hydrophilic property and a hydrophobic property, respectively, a coloring agent of 0.1 to 15 parts by weight based on 100 parts by weight of the inkjet composition, and a solvent.

These and/or other aspects and advantages of the present general inventive concept will become apparent and more readily appreciated from the following description of the embodiments, taken in conjunction with the accompanying drawings of which:
FIGURE 1 is a perspective view illustrating an inkjet recording apparatus including an ink cartridge having an ink composition according to an embodiment of the present general inventive concept; and
FIGURE 2 is a cross-sectional view illustrating an ink cartridge having an ink composition, according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

The present general inventive concept provides an ink composition for inkjet recording that may include at least one amine-based compound represented by Formula 1 below, at least two surfactants, a coloring agent, and water, which prevent kogation on a surface of a heater of an inkjet printer head.

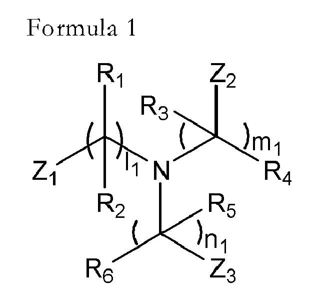

Here, R₁, R₂, R₃, R₄, R₅ and R₆ can each independently be: a hydrogen atom, a halogen atom, a nitro atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, or a substituted or unsubstituted C3-C20 heterocycloalkyl group.
Z₁, Z₂ and Z₃ can each independently be: a hydrogen atom, a halogen atom, a nitro group, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, or a substituted or unsubstituted C3-C20 heterocycloalkyl group. l₁, m₁ and n₁ can each independently be integers from 0 to 5, wherein at least one of l₁, m₁ and n₁ is an integer greater than 1.

The amine-based compound of Formula 1 can improve a uniformity of printed images and can maintain a long-term reliability of ink by facilitating a flow and supply of ink with at least two surfactants. With the improvement in ink stability and uniformity, the ink composition for inkjet recording in which kogation can be decreased or prevented on the surface of the heater, and in which ink droplets can be smoothly ejected in a long-term use, can be prepared.

The compound of Formula 1 may be an alkylamine-based compound, an alkanolamine-based compound, or a mixture thereof. Examples of the alkylamine-based compound may include: methylamine, ethylamine, propylamine, butylamine, pentylamine, N,N-dimethylamine, N,N-diethylamine, N,N-dipropylamine, N,N-dibutylamine, N,N-dipentylamine, trimethylamine, triethylamine, tripropylamine, tributylamine, tripentylamine, and a mixture having at least two thereof. Examples of the alkanolamine-based compound may include methanolamine, ethanolamine, propanolamine, butanolamine, pentanolamine, N-methylmethanolamine, N-ethylmethanolamine, N-propylmethanolamine, N-butylmethanolamine, N-pentylmethanolamine, N-methylethanolamine, N-ethylethanolamine, N-propylethanolamine, N-butylethanolamine, N-pentylethanolamine, N-methylpropanolamine, N-ethylpropanolamine, N-propylpropanolamine, N-butylpropanolamine, N-pentylpropanolamine, N-methylbutanolamine, N-ethylbutanolamine, N-propylbutanolamine, N-butylbutanolamine, N-pentylbutanolamine, N-methylpentanolamine, N-ethylpentanolamine, N-propylpentanolamine, N-butylpentanolamine, N-pentylpentanolamine, N,N-dimethylmethanolamine, N,N-diethylmethanolamine, N,N-dipropylmethanolamine, N,N-dibutylmethanolamine, N,N-dipentylmethanolamine, N,N-dimethylethanolamine, N,N-diethylethanolamine, N,N-dipropylethnaolamine, N,N-dibutylethanolamine, N,N-dipentylethanolamine, N,N-dimethylpropanolamine, N,N-diethylpropanolamine, N,N-dipropylpropanolamine, N,N-dibutylpropanolamine, N,N-dipentylpropanolamine, N,N-dimethylbutanolamine, N,N-diethylbutanolamine, N,N-dipropylbutanolamine, N,N-dibutylbutanolamine, N,N-dipentylbutanolamine, N,N-dimethylpentanolamine, N,N-diethylpentanolamine, N,N-dipropylpentanolamine, N,N-dibutylpentanolamine, N,N-dipentylpentanolamine, N-methyldimethanolamine, N-ethyldimethanolamine, N-propyldimethanolamine, N-butyldimethanolamine, N-pentyldimethanolamine, N-methyldiethanolamine, N-ethyldiethanolamine, N-propyldiethanolamine, N-butyldiethanolamine, N-pentyldiethanolamine, N-methyldipropanolamine, N-ethyldipropanolamine, N-propyldipropanolamine, N-butyldipropanolamine, N-pentyldipropanolamine, N-methyldibutanolamine, N-ethyldibutanolamine, N-propyldibutanolamine, N-butyldibutanolamine, N-pentyldibutanolamine, N-methyldipentanolamine, N-ethyldipentanolamine, N-propyldipentanolamine, N-butyldipentanolamine, N-pentyldipentanolamine, trimethanolamine, triethanolamine, tripropanolamine, tributanolamine, tripentanolamine, and a mixture having at least two thereof.

The ink composition for inkjet recording according to an embodiment of the present general inventive concept may include 0.5 to 10 parts by weight of the amine-based compound of Formula 1 based on 100 parts by weight of the ink composition. When the amount of the amine-based compound is less than 0.5 parts by weight, kogation may not be sufficiently prevented. On the other hand, when the amount of the amine-based compound is greater than 10 parts by weight, a precipitation may occur due to decrease in a solubility of the ink composition that may block a nozzle, and thus, ink may not be smoothly ejected from the nozzle of the inkjet head.

When at least two surfactants are included in the ink composition for inkjet recording with the amine-based compound, a surface tension can be changed (e.g. decreased) on a surface of ink and dispersion of the coloring agent can be stabilized inside the ink.

At least two surfactants may be included in the ink composition, and at least one of the at least two surfactants may have a Hydrophilic Lipophilic Balance (HLB) greater than 12, and may be between 12 and 20 to have a strong hydrophilic property. At least one of the at least two surfactants may have an HLB of less than 12, and may be between 4 and 12 to have a weak hydrophilic property. Here, the amine-based compound of Formula 1 may be used to prevent a layer disassembling in the surfactant having an HLB less than 12.

The term "hydrophilic lipophilic balance" was introduced by engineers of Atalas Powder Company (U.S.A.), and indicates a measure of a degree of hydrophilic and lipophilic molecular balance in the surfactant. The HLB depends on the molecular structure, and a surfactant can be effectively selected based on the HLB.

The surfactant having the HLB described above according to an embodiment of the present general inventive concept may include at least two compounds selected from the group consisting of compounds represented by Formulae 2 through 5.

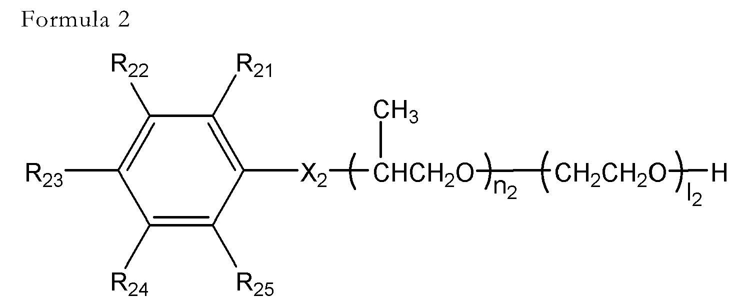

Here, R₂₁, R₂₂, R₂₃, R₂₄, R₂₅ and R₂₆ can each independently be the same as R₁ described above.

X₂ can be: a bond, an oxygen atom, a sulfur atom, NR₂₆, a substituted or unsubstituted C2-C20 alkylene group, a substituted or unsubstituted C2-C20 heteroalkylene group, a substituted or unsubstituted C6-C30 arylene group, a substituted or unsubstituted C6-C30 heteroarylene group, a substituted or unsubstituted C2-C20 alkenylene group, a substituted or unsubstituted C2-C20 heteroalkenylene group, a substituted or unsubstituted C5-C30 cycloalkylene group, a substituted or unsubstituted C7-C30 aralkylene group, a carbonyl group or a carboxy group.

l₂ and n₂ can each independently be integers from 0 through 100, wherein at least one of l₂ and n₂ is an integer greater than 1. 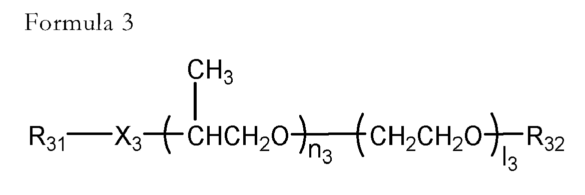 Here, R₃₁ and R₃₂ can each independently be the same as R₂₁ described above.
X₃ can be the same as X₂ described above.
l₃ and n₃ can each independently be integers from 0 through 100, wherein at least one of l₃ and n₃ is an integer greater than 1.

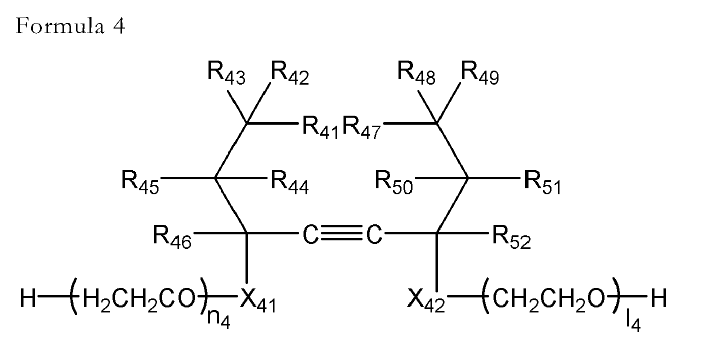

Here, R₄₁, R₄₂, R₄₃, R₄₄, R₄₅, R₄₆, R₄₇, R₄₈, R₄₉, R₅₀, R₅₁ and R₅₂ Can each independently be the same as R₂₁ described above.
X₄₁ and X₄₂ can each independently be the same as X₂ described above.
l₄ and n₄ can each independently be integers from 0 through 100, wherein at least one of l₄ and n₄ is an integer greater than 1.

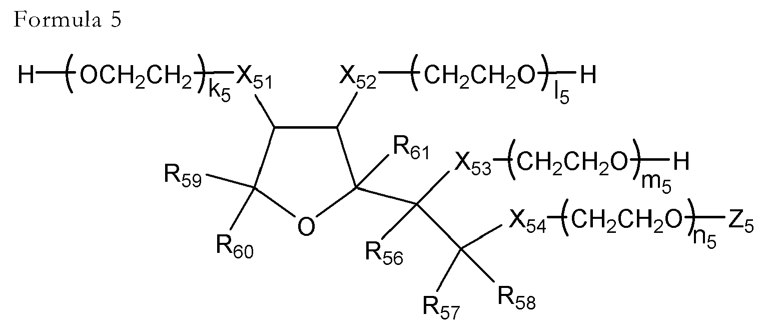

Here, R₅₆, R₅₇, R₅₈, R₅₉, R₆₀ and R₆₁ can each independently be the same as R₂₁ described above.

Z₅ can be the same as R₂₁ described above.

X₅₁ and X₅₂ can each independently be the same as X₂ described above.

k₅, l₅, m₅, and n₅ can each independently be integers from 0 through 100, wherein at least one of l₅ and n₅ is an integer greater than 1.

The at least two surfactants of an embodiment of the present general inventive concept may include a compound represented by Formula 4.

The coloring agent that can be included in the ink composition, according to an embodiment of the present general inventive concept, may be: a dyestuff, a pigment, or a self-dispersing pigment, but the present general inventive concept is not limited thereto, and other coloring agents that are commonly used in the art may be used. That is, the coloring agent may be dyestuffs which can be dissolved and dispersed in water, pigments which can be stably dispersed in water with a dispersing agent, self-dispersing pigments which can be stably dispersed in water without the dispersing agent, and a mixture thereof.

Examples of the dyestuffs in the coloring agent may include: food black dyes, food red dyes, food yellow dyes, food blue dyes, acid black dyes, acid red dyes, acid blue dyes, acid yellow dyes, direct black dyes, direct blue dyes, direct yellow dyes, anthraquinone dyes, monoazo dyes, disazo dyes, and phthalocyanine derivatives, but are not limited thereto. Examples of the pigments in the coloring agent may include carbon black, graphite, vitreous carbon, activated charcoal, activated carbon, anthraquinone, phthalocyanine blue, phthalocyaniene green, diazos, monoazos, pyranthrones, perylene, quinacridone, and indigoid pigments, and examples of self-dispersing pigments may include cabojet-series and CW-series of Orient Chemical, but the present general inventive concept is not limited thereto, and can include other types of suitable dyestuffs.

The amount of the coloring agent may be 0.1-15 parts by weight, and can be 1-10 parts by weight, based on 100 parts by weight of the ink composition. When the amount of the coloring agent is less than 0.1 parts by weight, the coloring property is not good. On the other hand, when the amount of the coloring agent is greater than 15 parts by weight, costs for manufacturing the ink composition may increase.

The solvent may be a water-based solvent and may further include at least one organic solvent. The amount of solvent may be 70-90 parts by weight based on 100 parts by weight of the ink composition. When the amount of the solvent is less than 70 parts by weight, a viscosity of the ink composition is increased too high and an ejecting efficiency can decrease. On the other hand, when the amount of the solvent is greater than 90 parts by weight, the viscosity of the ink composition may be too low, which may not be desirable.

The organic solvent that can be included in the solvent may include at least one solvent selected from the group consisting of: an alcohol, a ketone, an ester, a polyhydric alcohol, a polyhydric alcohol derivative, a nitrogen-containing compound, and a sulfur-containing compound such as dimethyl sulfoxide, tetramethylene sulfone, or thioglycol. For example, a monohydric alcohol-based solvent can control the surface tension of the ink and improve a permeability, a property in dot formation, and a property in drying printed images on a recording medium such as a sheet of paper. The polyhydric alcohol-based or its derivative solvent does not easily evaporate and can lower a freezing point, and thus can prevent clogging of the nozzle by improving a storage stability of the ink.

A monohydric alcohol-based organic solvent can be a low alcohol, such as, methyl alcohol, ethyl alcohol, n-propyl alcohol, i-propyl alcohol, n-butyl alcohol, sec-butyl alcohol, or t-butyl alcohol, and more preferably ethyl alcohol, i-propyl alcohol, or n-butyl alcohol; a polyhydric alcohol-based organic solvent can be ethylene glycol, diethyleneglycol, triethyleneglycol, propyleneglycol, butyleneglycol, or alkyleneglycol such as glycerol, polyalkyleneglycol such as polyethyleneglycol and polypropyleneglycol, and thioglycol.

A polyhydric alcohol derivative-based organic solvent can be a low alkyl ether of the polyhydric alcohol, such as, ethyleneglycol dimethylether, or a low carboxylic acid ester of the polyhydric alcohol, such as ethyleneglycol diacetate. A ketone-based organic solvent can be acetone, methylethylketone, diethylketone, or diacetone alcohol. The ester-based solvent can be methyl acetate, ethyl acetate, or ethyl lactate.

A nitrogen-containing compound-based organic solvent can be 2-pyrrolidone or N-methyl-pyrrolidone, and an S-containing compound-based organic solvent can be dimethyl sulfoxide, tetramethylene sulfone, or thioglycol.

When the organic solvent is used with a water-based solvent such as water, the amount of the organic solvent may be 0.1-130 parts by weight based on 100 parts by weight of water. When the amount of the organic solvent is less than 0.1 parts by weight, the ink may evaporate too fast and the stability of ink may be degraded, and when the amount of the organic solvent is greater than 130 parts by weight, the viscosity may increase and the ejection of the ink may not be smoothly performed. The ink composition according to the current embodiment of the present general inventive concept may further include various additives to improve properties of the ink composition, and more particularly, may include at least one additive selected from the group consisting of: a wetting agent, a dispersing agent, a surfactant, a viscosity modifier, a pH regulator, and an antioxidizing agent. The amount of the additives may be 0.1-20 parts by weight, and can be 0.1-10 parts by weight, based on 100 parts by weight of the ink composition.

To obtain optimized conditions for the ink composition according to the current embodiment of the present general inventive concept, the surface tension of the ink composition may be 15-70 dyne/cm at 20 , and can be 25-55 dyne/cm, and the viscosity of the ink composition may be 1.5-20 cps, and can be 1.5-3.5 cps.

A multicolor ink set that may include at least two ink compositions prepared according to an embodiment of the present general inventive concept can be prepared. The multicolor ink set can be used in an ink receiving unit of an inkjet recording apparatus or an ink cartridge for an inkjet printer. An inkjet recording apparatus may include a thermal head from which ink droplets are ejected by vapour pressure obtained from heating the ink composition, a piezo head from which ink droplets are ejected by a piezo device, a disposable head or a permanent head, and preferably a thermal head. In addition, the inkjet recording apparatus can be a scanning type printer or an array type printer, and may be an array type printer having 10,000 nozzles or more, and can be used for a desktop, textile, and industrial purpose. These properties of the inkjet recording apparatus are described for illustrative purposes only, and the particular use of the inkjet recording apparatus is not limited thereto in the present general inventive concept.

The substituents that are used in the present general inventive concept may be defined as follows.

The term "alkyl" indicates a saturated, monovalent, straight or branched hydrocarbon group having 1-20 carbon atoms (e.g. 1, 2, 3, 4, 5, 6, 7, 8, 9, 10, 11, 12, 13, 14, 15, 16, 17, 18, 19, and 20 carbon atoms), may have 1-10 carbon atoms, and may also have 1-6 carbon atoms. The alkyl group can be arbitrarily substituted with at least one halogen substituent. Examples of the alkyl group may include a methyl group, an ethyl group, a propyl group, a 2-propyl group, an n-butyl group, an isobutyl group, a tert-butyl group, a pentyl group, a hexyl group, a dodecyl group, a fluoromethyl group, a difluoromethyl group, a trifluoromethyl group, a chloromethyl group, a dichloromethyl group, a trichloromethyl group, an iodometyl group, and a bromomethyl group.

The term "alkenyl" indicates a monovalent, straight or branched hydrocarbon group having one or more carbon-carbon double bonds therein and 2-20 carbon atoms (e.g. 2, 3, 4, 5, 6, 7, 8, 9, 10, 11, 12, 13, 14, 15, 16, 17, 18, 19, and 20 carbon atoms), may have 2-10 carbon atoms, and may also have 2-6 carbon atoms. The alkenyl group can bind with a main chain through a carbon atom in the carbon-carbon double bonds or a saturated carbon atom. The alkenyl group can be arbitrarily substituted with at least one halogen substituent. Examples of the alkenyl group may include an ethenyl group, a 1-propenyl group, a 2-propenyl group, a 2-butenyl group, a 3-butenyl group, a pentenyl group, a 5-hexenyl group, and a dodecenyl group.

The term "cycloalkyl" indicates a carbocyclic, saturated or unsaturated, nonaromatic, monovalent, monocyclic, bicyclic, or tricyclic hydrocarbon group having 5-30 carbon atoms (e.g. 5, 6, 7, 8, 9, 10, 11, 12, 13, 14, 15, 16, 17, 18, 19, 20, 21, 22, 23, 24, 25, 26, 27, 28, 29, and 30 carbon atoms). The cycloalkyl group can be arbitrarily substituted with at least one halogen substituent. Examples of the cycloalkyl group may include a cyclopropyl group, a cyclobutyl group, a cyclopentyl group, a cyclopentenyl group, a cyclohexyl group, a cyclohexenyl group, a cycloheptyl group, a cyclooctyl group, a decahydronaphthalenyl group, an adamantyl, and a norbornyl (e.g., bicyclo [2. 2.1] hept-5-enyl.

The term "aryl" indicates a carbocyclic, monovalent, monocyclic, bicyclic, or tricyclic aromatic hydrocarbon group having 6-30 carbon atoms (e.g. 6, 7, 8, 9, 10, 11, 12, 13, 14, 15, 16, 17, 18, 19, 20, 21, 22, 23, 24, 25, 26, 27, 28, 29, and 30 carbon atoms), and may have 6-18 carbon atoms. The aryl group can be arbitrarily substituted with at least one halogen substituent. The aromatic portion of the aryl group only includes carbon atoms. Examples of the aryl group may include a phenyl group, a naphthalenyl group, and a fluorenyl group.

The term "aralkyl" indicates an alkyl group, wherein at least one hydrogen atom of the alkylene group is substituted with an aryl group, and the aralkyl group can be arbitrarily substituted with at least one halogen substituent. Examples of the aralkyl group may include a benzyl group, a benzhydryl group, and a trityl group.

The term "alkynyl" indicates a monovalent straight or branched hydrocarbon group having one or more carbon-carbon triple bonds and 2-20 carbon atoms (e.g. 2, 3, 4, 5, 6, 7, 8, 9, 10, 11, 12, 13, 14, 15, 16, 17, 18, 19, and 20 carbon atoms), and may have 2-10 carbon atoms, and may also have 2-6 carbon atoms. The alkynyl group can bind with a main chain through a carbon atom in the carbon-carbon triple bonds or a saturated carbon atom. The alkynyl group can be arbitrarily substituted with at least one halogen substituent. Examples of the alkynyl group may include an ethynyl group and a propynyl group.

The term "alkylene" indicates a saturated, divalent, straight or branched hydrocarbon group having 1-20 carbon atoms (e.g. 1, 2, 3, 4, 5, 6, 7, 8, 9, 10, 11, 12, 13, 14, 15, 16, 17, 18, 19, and 20 carbon atoms), may have 1-10 carbon atoms, and may also have 1-6 carbon atoms. The alkylene group can be arbitrarily substituted with at least one halogen substituent. Examples of the alkyl group may include a methylene group, an ethylene group, a propylene group, a butylene group, and a hexylene group.

The term "alkenylene" indicates a bivalent straight or branched hydrocarbon group having one or more carbon-carbon double bonds and 2-20 carbon atoms (e.g. 2, 3, 4, 5, 6, 7, 8, 9, 10, 11, 12, 13, 14, 15, 16, 17, 18, 19, and 20 carbon atoms), may have 2-10 carbon atoms, and may also have 2-6 carbon atoms. The alkenylene group can bind with a main chain through a carbon atom in the carbon-carbon double bonds or a saturated carbon atom. The alkenylene group can be arbitrarily substituted with at least one halogen substituent.

The term "cycloalkylene" indicates a carbocyclic, saturated or unsaturated, nonaromatic, bivalent, monocyclic, bicyclic, or tricyclic hydrocarbon group having 5-30 carbon atoms (e.g. 5, 6, 7, 8, 9, 10, 11, 12, 13, 14, 15, 16, 17, 18, 19, 20, 21, 22, 23, 24, 25, 26, 27, 28, 29, and 30 carbon atoms). The cycloalkylene group can be arbitrarily substituted with at least one halogen substituent. Examples of the cycloalkylene group may include a cyclopropylene group and a cyclobutylene group. The term "arylene" indicates a carbocyclic, bivalent, monocyclic, bicyclic, or tricyclic aromatic hydrocarbon group having 6-30 carbon atoms (e.g. 6, 7, 8, 9, 10, 11, 12, 13, 14, 15, 16, 17, 18, 19, 20, 21, 22, 23, 24, 25, 26, 27, 28, 29, and 30 carbon atoms), and may have 6-18 carbon atoms. The arylene group can be arbitrarily substituted with at least one halogen substituent. Example of the arylene group may include a phenylene group.

The term "aralkylene" indicates a bivalent group, wherein at least one hydrogen atom of the alkyl group is substituted with an aryl group, and the aralkylene group can be arbitrarily substituted with at least one halogen substituent. Examples of the aralkylene may include a benzylene group.

The term "alkynylene" indicates a bivalent straight or branched hydrocarbon group having one or more carbon-carbon triple bonds and 2-20 carbon atoms (e.g. 2, 3, 4, 5, 6, 7, 8, 9, 10, 11, 12, 13, 14, 15, 16, 17, 18, 19, and 20 carbon atoms), and may have 2-10 carbon atoms, and may also have 2-6 carbon atoms. The alkynylene group can bind with a main chain through a carbon atom in the carbon-carbon triple bonds or a saturated carbon atom. The alkynylene group can be arbitrarily substituted with at least one halogen substituent. Examples of the alkynylene group may include an ethynylene group and a propynylene group.

The term "heteroalkyl" indicates an alkyl group, wherein at least one carbon atom in the main chain of the alkyl group is substituted with a hetero atom such as nitrogen, sulfur, oxygen, or phosphor.

The term "heteroaryl" indicates an aryl group, wherein at least one carbon in the ring of the aryl group is substituted with a hetero atom such as nitrogen, sulfur, oxygen, or phosphor.

The term "a bond" indicates a chemical linkage simply connected by a chemical bond without any substituent.

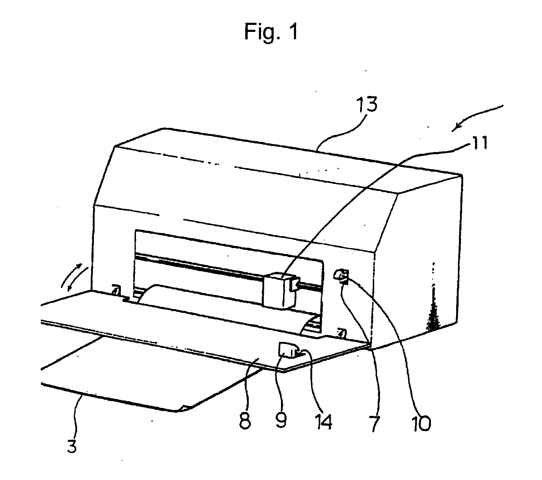

FIGURE 1 is a perspective view illustrating an inkjet recording apparatus according to an embodiment of the present general inventive concept.

Referring to FIGURE 1, the inkjet recording apparatus may include an ink cartridge 11 having an ink composition that contains a colorant and pseudo-colorant additives. A printer cover 8 can be connected to a main body 13 of a printer in FIGURE 1. The inkjet recording apparatus may also include an engaging portion of a movable latch 10 protrudes through a hole 7. The movable latch 10 engages with a fixed latch 9 that is coupled to an inner side of the printer cover 8 when the printer cover 8 is closed. The printer cover 8 may have a recess 14 in a region corresponding to the engaging portion of the movable latch 10 protruding through the hole 7. The ink cartridge 11 is positioned such that ink can be ejected onto paper 3 that passes under the ink cartridge 11.

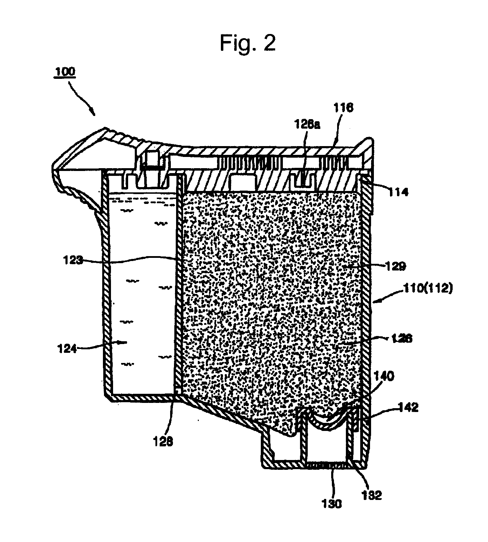

FIGURE 2 is a cross-sectional view illustrating an ink cartridge 100 for an inkjet printer having an ink composition, according to an embodiment of the present general inventive concept. Referring to FIGURE 2, the ink cartridge 100 for the inkjet printer may include an ink cartridge main body 110 defining an ink storage tank 112, an inner cover 114 covering a top portion of the ink storage tank 112, and an outer cover 116 that is separated by a predetermined gap from the inner cover 114 in order to encapsulate the ink storage tank 112 and the inner cover 114.

The ink storage tank 112 can be divided into a first chamber 124 and a second chamber 126 including a sponge 129 by a vertical barrier wall 123. An ink path 128 between the first chamber 124 and the second chamber 126 can be formed in a bottom portion of the vertical barrier wall 123. The first chamber 124, the sponge 129, and the second chamber 126 are filled with ink. A bent hole 126A corresponding to the second chamber 126 can be set in the inner cover 114.
In addition, a filter 140 can be disposed in a lower portion of the second chamber 126, so that ink impurities and bubbles are filtered to prevent ejection holes of a printer head 130 from being blocked. A hook 142 can be formed in the edge of the filter 140 and can be coupled to a top portion of a standpipe 132. Thus, ink can be ejected from the ink storage tank 112 onto a printing medium in a liquid-drop form through the ejection holes of the printer head 130.

Hereinafter, the present general inventive concept will be described in greater detail with reference to the following examples. The following examples are for illustrative purposes only and are not intended to limit the scope of the general inventive concept.

### Preparation of ink compositions:

Components listed in Examples 1 through 4 were completely mixed in a mixer to prepare ink compositions for inkjet recording of Examples 1 through 4.

### Example 1

| | |
|---|---|
| C.I. Basic Black 2 | 4.5% by weight |
| Glycerol | 7.5% by weight |
| Diethylene glycol | 12.0% by weight |
| Triethanolamine | 5% by weight |
| Tergitor 15-S-12 (HLB: 13) | 0.5% by weight |
| Sorsprese 20000 (HLB: 8) | 1% by weight |
| Water (deionized) | 69.5% by weight |

### Example 2

| | |
|---|---|
| C.I. Direct Yellow 44 | 4.0% by weight |
| Glycerol | 9.5% by weight |
| Diethylene glycol | 5.5% by weight |
| Ethylene glycol | 4.5% by weight |
| Triethyleneamine | 8% by weight |
| Surfynol 485 (HLB: 17) | 0.5% by weight |
| Tergitol 15-S-5 (HLB: 10) | 1% by weight |
| Water (deionized) | 67% by weight |

### Example 3

| | |
|---|---|
| C.I. Basic Blue 26 | 4.5% by weight |
| Diethylene glycol | 9.5% by weight |
| Ethylene glycol | 10.5% by weight |
| Diethanolamine | 6% by weight |
| Tween 20 (HLB: 16) | 0.5% by weight |
| Surfynol 104 (HLB: 8) | 0.5% by weight |
| Water (deionized) | 68.5% by weight |

### Example 4

| | |
|---|---|
| C.I. direct Red 227 | 3.5% by weight |
| Glycerol | 10.5% by weight |
| Diethylene glycol | 4.5% by weight |
| Ethylene glycol | 5.5% by weight |
| Triethanolamine | 6% by weight |
| Surfynol 465 (HLB: 13) | 1% by weight |
| Span 20(HLB: 8.6) | 0.5% by weight |
| Water (deionized) | 68.5% by weight |

### Comparative Example 1

| | |
|---|---|
| C.I. Basic Black 2 | 4.5% by weight |
| Glycerol | 7.5% by weight |
| Diethylene glycol | 12.0% by weight |
| Tergitor 15-S-12 (HLB: 13) | 1.5% by weight |
| Sorsprese 20000 (HLB: 8) | 1% by weight |
| Water (deionized) | 74.5% by weight |

### Comparative Example 2

| | |
|---|---|
| C.I. direct Yellow 44 | 4.0% by weight |
| Glycerol | 9.5% by weight |
| Diethylene glycol | 5.5% by weight |
| Ethylene glycol | 4.5% by weight |
| Triethyleneamine | 8% by weight |
| Surfynol 485 (HLB: 17) | 1.5% by weight |
| Water (deionized) | 67% by weight |

### Comparative Example 3

| | |
|---|---|
| C.I. Basic Blue 26 | 4.5% by weight |
| Diethylene glycol | 9.5% by weight |
| Ethylene glycol | 10.5% by weight |
| Diethanolamine | 6% by weight |
| Tween 20 (HLB: 16) | 1% by weight |
| Water (deionized) | 68.5% by weight |

### Comparative Example 4

| | |
|---|---|
| C.I. Direct Red 227 | 3.5% by weight |
| Glycerol | 10.5% by weight |
| Diethylene glycol | 4.5% by weight |
| Ethylene glycol | 5.5% by weight |
| Surfynol 465 (HLB: 13) | 1% by weight |
| Span 20(HLB: 8.6) | 0.5% by weight |
| Water (deionized) | 74.5% by weight |

### Evaluating Experiment:

The ink compositions prepared according to Examples 1 through 4 and Comparative Examples 1 through 4 were filled into an inkjet printer having a thermal device and ink was ejected on paper. A change in ejection velocity was calculated (decrease rate of ejection (%)) by measuring velocities of ink ejections in the initial stage and after 100,000,000 pulses. The results are illustrated in Table 1. After 100,000,000 pulse ejections, the surface of the thermal device was observed using an optical microscope to evaluate the presence of precipitate, i.e. kogation. "A" indicates a state in which the precipitate does not substantially exist on the surface of the thermal device, "B" indicates a state in which the precipitate hardly exists on the surface of the thermal device, and "C" indicates a state in which precipitate exist on the surface of the thermal device. The results are illustrated in Table 1.

**Table 1**

| | Decrease rate of ejection (%) | Kogation |
|---|---|---|
| Example 1 | 5 | A |
| Example 2 | 8 | A |
| Example 3 | 12 | A |
| Example 4 | 6 | A |
| Comparative Example 1 | 62 | C |
| Comparative Example 2 | 58 | C |
| Comparative Example 3 | 35 | B |
| Comparative Example 4 | 70 | C |

As illustrated in Table 1, when the ink compositions including an amine-based compound and two surfactants prepared according to Examples 1 through 4 are used in a thermal inkjet printing, the decrease rate of ejection is less than 20% after 100,000,000 pulses, and thus the ink composition can be applied in a practical use. In addition, an oxidation on the surface of the thermal device was observed, but no kogation was observed.

Meanwhile, when ink compositions prepared according to Comparative Examples 1 through 4 are used in a thermal inkjet printing, the decrease rate of ejection is greater than 20% after 100,000,000 pulses, and thus the ink compositions are not suitable for a practical use. In particular, the ink composition prepared in Comparative Example 4 could not be ejected due to serious kogation, and precipitate was observed on the entire region of the surface of the thermal device of the printer nozzle.

According to these results, it was identified that when ink compositions for inkjet recording including the amine-based compound and two surfactants of the present general inventive concept are used in a thermal inkjet printer head, kogation, which is precipitation of impurities on the surface of the thermal device, can be prevented. Thus, when ink composition for inkjet recording of the present general inventive concept is used , ink droplets can be smoothly ejected from an inkjet printer head in long-term use by decreasing or preventing kogation.

## Claims

1. An ink composition for inkjet recording, comprising:
at least one amine-based compound represented by Formula 1 below;
at least two surfactants;
a coloring agent; and
a solvent, 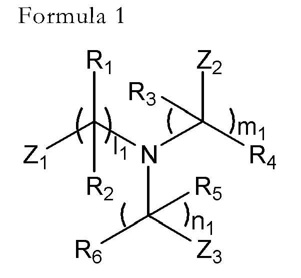
wherein:
R₁, R₂, R₃, R₄, R₅, and R₆ are each independently selected from a group consisting of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group,
Z₁, Z₂, and Z₃ are each independently selected from a group consisting of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group, and 1₁, m₁, and n₁ are each independently integers from 0 to 5 and at least one of 1₁, m₁, and n₁ is an integer greater than 1.

2. The ink composition of claim 1, wherein the at least one amine-based compound represented by Formula 1 is an alkylamine-based compound, an alkanolamine-based compound, or mixture thereof.

3. The ink composition of claim 2, wherein the alkylamine-based compound is selected from the group consisting of methylamine, ethylamine, propylamine, butylamine, pentylamine, N,N-dimethylamine, N,N-diethylamine, N,N-dipropylamine, N,N-dibutylamine, N,N-dipentylamine, trimethylamine, triethylamine, tripropylamine, tributylamine, tripentylamine, and mixtures thereof.

4. The ink composition of claim 2, wherein the alkanolamine-based compound is selected from the group consisting of methanolamine, ethanolamine, propanolamine, butanolamine, pentanolamine, N-methylmethanolamine, N-ethylmethanolamine, N-propylmethanolamine, N-butylmethanolamine, N-pentylmethanolamine, N-methylethanolamine, N-ethylethanolamine, N-propylethanolamine, N-butylethanolamine, N-pentylethanolamine, N-methylpropanolamine, N-ethylpropanolamine, N-propylpropanolamine, N-butylpropanolamine, N-pentylpropanolamine, N-methylbutanolamine, N-ethylbutanolamine, N-propylbutanolamine, N-butylbutanolamine, N-pentylbutanolamine, N-methylpentanolamine, N-ethylpentanolamine, N-propylpentanolamine, N-butylpentanolamine, N-pentylpentanolamine, N,N-dimethylmethanolamine, N,N-diethylmethanolamine, N,N-dipropylmethanolamine, N,N-dibutylmethanolamine, N,N-dipentylmethanolamine, N,N-dimethylethanolamine, N,N-diethylethanolamine, N,N-dipropylethnaolamine, N,N-dibutylethanolamine, N,N-dipentylethanolamine, N,N-dimethylpropanolamine, N,N-diethylpropanolamine, N,N-dipropylpropanolamine, N,N-dibutylpropanolamine, N,N-dipentylpropanolamine, N,N-dimethylbutanolamine, N,N-diethylbutanolamine, N,N-dipropylbutanolamine, N,N-dibutylbutanolamine, N,N-dipentylbutanolamine, N,N-dimethylpentanolamine, N,N-diethylpentanolamine, N,N-dipropylpentanolamine, N,N-dibutylpentanolamine, N,N-dipentylpentanolamine, N-methyldimethanolamine, N-ethyldimethanolamine, N-propyldimethanolamine, N-butyldimethanolamine, N-pentyldimethanolamine, N-methyldiethanolamine, N-ethyldiethanolamine, N-propyldiethanolamine, N-butyldiethanolamine, N-pentyldiethanolamine, N-methyldipropanolamine, N-ethyldipropanolamine, N-propyldipropanolamine, N-butyldipropanolamine, N-pentyldipropanolamine, N-methyldibutanolamine, N-ethyldibutanolamine, N-propyldibutanolamine, N-butyldibutanolamine, N-pentyldibutanolamine, N-methyldipentanolamine, N-ethyldipentanolamine, N-propyldipentanolamine, N-butyldipentanolamine, N-pentyldipentanolamine, trimethanolamine, triethanolamine, tripropanolamine, tributanolamine, tripentanolamine, and mixtures thereof.

5. The ink composition of any one of claims 1 to 4, wherein the at least two surfactants are selected from the group consisting of compounds represented by Formulae 2 through 5 below: 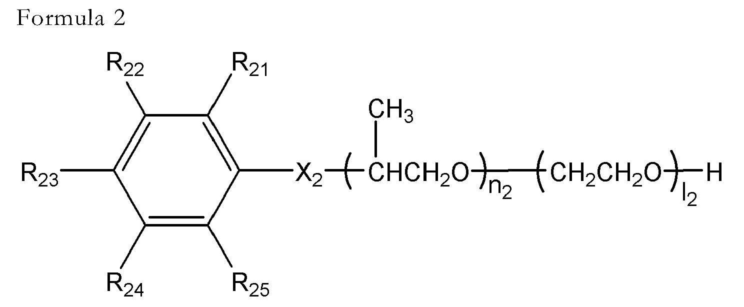 wherein:
R₂₁, R₂₂, R₂₃, R₂₄, R₂₅, and R₂₆ are each independently selected from a group consisting of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group,
X₂ is selected from a group consisting of a bond, an oxygen atom, a sulfur atom, NR₂₆, a substituted or unsubstituted C2-C20 alkylene group, a substituted or unsubstituted C2-C20 heteroalkylene group, a substituted or unsubstituted C6-C30 arylene group, a substituted or unsubstituted C6-C30 heteroarylene group, a substituted or unsubstituted C2-C20 alkenylene group, a substituted or unsubstituted C2-C20 heteroalkenylene group, a substituted or unsubstituted C5-C30 cycloakylene group, a substituted or unsubstituted C7-C30 aralkylene group, a carbonyl group, and a carboxy group, and
1₂ and n₂ are each independently integers from 0 through 100 and at least one of l₂ and n₂ is an integer greater than 1, 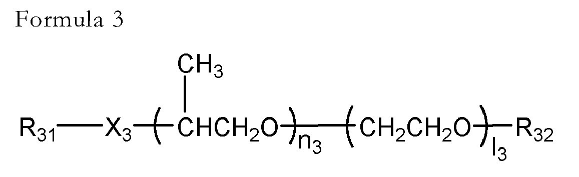
wherein:
R₃₁ and R₃₂ are each independently the same as R₂₁ described above,
X₃ is the same as X₂ described above, and
l₃ and n₃ are each independently integers from 0 through 100 and at least one of l₃ and n₃ is an integer greater than 1, 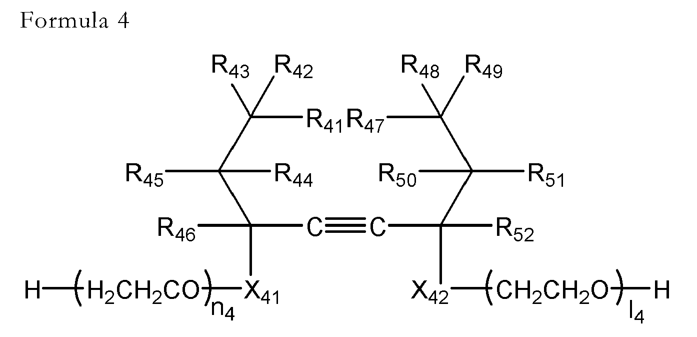
wherein:
R₄₁, R₄₂, R₄₃, R₄₄, R₄₅, R₄₆, R₄₇, R₄₈, R₄₉, R₅₀, R₅₁ , and R₅₂ are each independently the same as R₂₁ described above,
X₄₁ and X₄₂ are each independently the same as X₂ described above, and
l₄ and n₄ are each independently integers from 0 through 100 and at least one of l₄ and n₄ is an integer greater than 1, 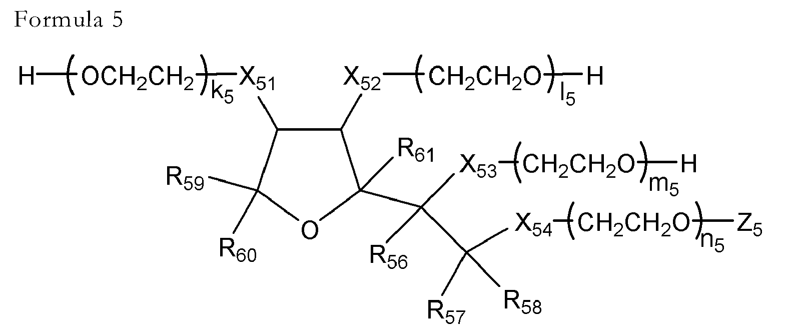
wherein:
R₅₆, R₅₇, R₅₈, R₅₉, R₆₀, and R₆₁ are each independently the same as R₂₁ described above,
Z₅ is the same as R₂₁ described above,
X₅₁ and X₅₂ are each independently the same as X₂ described above, and
k₅, l₅, m₅, and n₅ are each independently integers from 0 through 100 and at least one of l₅ and n₅ is an integer greater than 1.

6. The ink composition of claim 5, wherein the at least two surfactants comprise a compound represented by Formula 4.

7. The ink composition of any one of the preceding claims, wherein at least one of the at least two surfactants has a Hydrophilic Lipophilic Balance (HLB) greater than 12, and at least one of the at least two surfactants has an HLB of less than 12.

8. The ink composition of claim 7, wherein at least one of the at least two surfactants has an HLB between 12 and 20, and at least one of the at least two surfactants has an HLB between 4 and 12.

9. The ink composition of any one of the preceding claims, wherein the amount of the amine-based compound of Formula 1 is in the range of about 0.5 to 10 parts by weight based on 100 parts by weight of the ink composition.

10. The ink composition of any one of the preceding claims, wherein the amount of the at least two surfactants is in the range of about 0.5 to 20 parts by weight based on 100 parts by weight of the ink composition.

11. The ink composition of any one of the preceding claims, wherein the coloring agent is a dyestuff, a pigment, or a self-dispersing pigment.

12. The ink composition of any one of the preceding claims, wherein the amount of the coloring agent is in the range of about 0.1 to 15 parts by weight based on 100 parts by weight of the ink composition.

13. The ink composition of any one of the preceding claims, wherein the solvent is a water-based solvent, an organic solvent, or a mixture thereof.

14. The ink composition of any one of the preceding claims, wherein the amount of the solvent is in the range of about 70 to 90 parts by weight based on 100 parts by weight of the ink composition.

15. The ink composition of claims 13 or 14, wherein the organic solvent is at least one selected from the group consisting of an alcohol, a ketone, an ester, a polyhydric alcohol, a polyhydric alcohol derivative, a nitrogen-containing compound, and a sulfur-containing compound such as dimethyl sulfoxide, tetramethylene sulfone, and thioglycol.

16. The ink composition of claims 13 or 14, wherein the solvent comprises the water-based solvent in an amount of 100 parts by weight of the solvent and the organic solvent in an amount of about 0.1-130 parts by weight of the solvent.

17. The ink composition of any one of the preceding claims, wherein the surface tension of the ink composition is in the range of about 15 to 70 dyne/cm at 20°C.

18. The ink composition of any one of the preceding claims, wherein the viscosity of the ink composition is in the range of about 1.5 to 20 cps.

19. A multicolor ink set comprising at least two ink compositions, each ink composition comprising:
at least one amine-based compound represented by Formula 6 below;
at least two surfactants;
a coloring agent; and
a solvent, 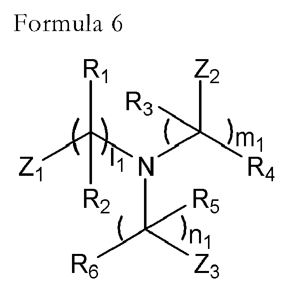
wherein:
R₁, R₂, R₃, R₄, R₅, and R₆ are each independently selected from a group consisting of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group,
Z₁, Z₂, and Z₃ are each independently selected from a group consisting of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group, and
l₁, m₁, and n₁ are each independently integers from 0 to 5 and at least one of l₁, m₁, and n₁ is an integer greater than 1.

20. An ink cartridge for an inkjet recording apparatus comprising a multicolor ink set having at least two ink compositions, each ink composition comprising:
at least one amine-based compound represented by Formula 7 below;
at least two surfactants;
a coloring agent; and
a solvent, 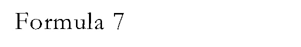 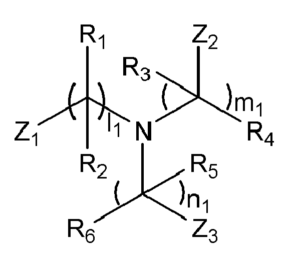
wherein:
R₁, R₂, R₃, R₄, R₅, and R₆ are each independently selected from a group consisting of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group,
Z₁, Z₂, and Z₃ are each independently selected from a group consisting of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group, and
l₁, m₁, and n₁ are each independently integers from 0 to 5 and at least one of l₁, m₁, and n₁ is an integer greater than 1.

21. An inkjet recording apparatus comprising an ink cartridge having a multicolor ink set comprising at least two ink compositions, each ink composition comprising:
at least one amine-based compound represented by Formula 8 below;
at least two surfactants;
a coloring agent; and
a solvent, 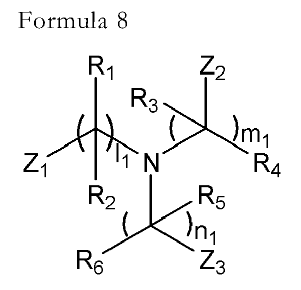
wherein:
R₁, R₂, R₃, R₄, R₅, and R₆ are each independently selected from a group consisting of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group,
Z₁, Z₂, and Z₃ are each independently selected from a group consisting of a hydrogen atom, a halogen atom, a hydroxyl group, an amino group, a nitro group, a cyano group, a substituted or unsubstituted C1-C20 alkyl group, a substituted or unsubstituted C2-C20 alkenyl group, a substituted or unsubstituted C1-C20 alkoxy group, a substituted or unsubstituted C1-C20 alkylsulfoneamide group, a substituted or unsubstituted C6-C20 arylsulfoneamide group, a substituted or unsubstituted C1-C20 acylamino group, a C1-C20 alkylureido group, a C6-C20 arylureido group, a C2-C20 alkoxycarbonyl group, a C2-C20 alkoxycarbonylamino group, a carbamoyl group, a sulfamoyl group, a sulfo group and a salt thereof, a carboxy group and a salt thereof, a substituted or unsubstituted C2-C20 hydroxyalkyloxyalkyl group, a substituted or unsubstituted C3-C20 dialkylaminoalkyl group, a substituted or unsubstituted C6-C20 pyridylalkyl group, a substituted or unsubstituted C5-C20 pyridyl group, a substituted or unsubstituted C6-C20 imidazolyl group, a hydrazine group, a hydrozone group, a substituted or unsubstituted C5-C30 cycloalkyl group, a substituted or unsubstituted C6-C30 aryl group, a substituted or unsubstituted C7-C30 arylalkyl group, a substituted or unsubstituted C1-C20 heteroalkyl group, a substituted or unsubstituted C2-C20 heteroalkenylene group, a substituted or unsubstituted C5-C20 heteroaryl group, a substituted or unsubstituted C6-C20 heteroarylalkyl group, a substituted or unsubstituted C6-C20 heteroarylalkenyl group, and a substituted or unsubstituted C3-C20 heterocycloalkyl group, and
l₁, m₁, and n₁ are each independently integers from 0 to 5 and at least one of l₁, m₁, and n₁ is an integer greater than 1.

22. The inkjet recording apparatus of claim 21, comprising a thermal head.

23. The inkjet recording apparatus of claims 21 or 22, comprising an array head having about 10,000 nozzles or more.

24. An inkjet composition for inkjet recording, comprising:
at least one amine-based compound of 0.5 to 10 parts by weight based on 100 parts by weight of the inkjet composition;
at least two surfactants having a hydrophilic property and a hydrophobic property, respectively;
a coloring agent of 0.1 to 15 parts by weight based on 100 parts by weight of the inkjet composition; and
a solvent.
